# EUROPEAN PATENT SPECIFICATION

(11) **EP 3 477 126 B1**
(45) Date of publication and mention of the grant of the patent: **09.09.2020**
(21) Application number: 18203873.7
(22) Date of filing: 31.10.2018
(51) Int. Cl.: F16B 13/06, F16B 13/08

(54) **EXPANSION ANCHOR**
SPREIZDÜBEL
COQUILLE D'EXPANSION

(30) Priority: 31.10.2017 IT 201700124235
(43) Date of publication of application: 01.05.2019
(73) Proprietor: Illinois Tool Works, Inc., Glenview, Illinois 60025 (US)
(72) Inventor: LUCON, Michele, Glenview IL 60025 (US)
(74) Representative: HGF

(56) References cited:
- CH-A- 344 832
- DE-A1- 2 150 572
- FR-A1- 2 278 007
- FR-A1- 2 611 005
- GB-A- 628 912
- GB-A- 2 412 417
- US-A1- 2015 233 409

## Description

### CROSS-REFERENCE TO RELATED APPLICATIONS

This application claims priority from Italian Patent Application No. 102017000124235 filed on October 31, 2017.

### TECHNICAL FIELD

The present invention relates to an expansion anchor. In particular, the present invention relates to an expansion anchor suitable for use in the construction sector for anchoring, for example, a load to a wall and/or to a body; although the text below refers explicitly to this concept, it is still applicable in a general sense.

### BACKGROUND ART

Two different types of expansion anchor are currently known.

A first type of expansion anchor consists of anchors made entirely of plastic, some of which are designed for anchoring to walls made of bricks with internal partitions defining internal cavities which are hollow or filled with low-density material, and/or walls made of a relatively friable or non-homogeneous material, such as multi-layer walls, walls made of not very compact granular concrete, and/or walls made of compact material and therefore having a high density, such as concrete walls or walls made of natural stone or solid bricks, i.e. consisting of high-density material.

The abovementioned plastic expansion anchors are particularly advantageous in that they have an almost universal application but their use is limited to the anchoring of loads having a relatively low weight.

For this reason, a second type of anchor has been developed, which differs from the above-described type essentially in that it includes a tubular body made of metal. In general, the tubular body comprises a metal conduit with an anchoring tab. The anchor further comprises a conical body and a tightening screw at the end of which the conical body is attached. In use, tightening the screw causes the conical body to move axially inside the conduit. During the axial movement, the wedge is gradually driven between the tabs, moving them apart towards the inside wall of the hole until they are positioned in abutment against said wall, thereby securing the anchor "by friction".

Although, on the one hand, metal anchors are designed to anchor particularly heavy loads, they are limited in that they are suitable for anchoring only to walls made of compact material, typically concrete. Therefore, these anchors have the technical problem of being unsuitable for anchoring relatively heavy loads also to non-compact walls, i.e. to walls made of bricks or panels or made of a relatively friable or non-homogeneous material. GB 628 912 A discloses a known expansion anchor.

### DISCLOSURE OF INVENTION

In this regard, the applicant has thus conducted an in-depth study to identify a solution that overcomes the above-described technical problems while at the same time meeting the abovementioned needs. The aim of the present invention is therefore that of producing an expandable anchor which is both "universal", i.e. can be used for any type of wall, and is capable of anchoring even high-weight loads.

This aim is achieved by the present invention in that it relates to an expandable anchor produced according to claim 1 and any of the dependent claims.

### BRIEF DESCRIPTION OF THE DRAWINGS

The present invention will now be described with reference to the attached drawings, which show a non-limiting embodiment thereof, in which:
Figure 1 is an axonometric view of an expansion anchor produced according to the present invention;
Figure 2 is an exploded view of the expansion anchor produced according to the present invention;
Figure 3 is a perspective view of a tubular body of the expansion anchor shown in Figures 1 and 2;
Figure 4 is a perspective view of an expansion nut of the expansion anchor shown in Figures 1 and 2;
Figure 5 is a perspective view of a flange of the expansion anchor shown in Figures 1 and 2;
Figures 6, 7, 8 and 9 are individual perspective views on an enlarged scale of relevant parts of the tubular body shown in Figure 3;
Figures 10 and 11 are two perspective views of another tubular body of the expansion anchor shown in Figure 1, in two relative positions which are different to one another;
Figure 12 is a view in side elevation of the expansion anchor shown in Figure 1;
Figure 13 is a view from above of the expansion anchor shown in Figure 1;
Figure 14 is a longitudinal section along the line II-II of the expansion anchor shown in Figure 13;
Figure 15 is a longitudinal section along the line I-I of the expansion anchor shown in Figure 12;

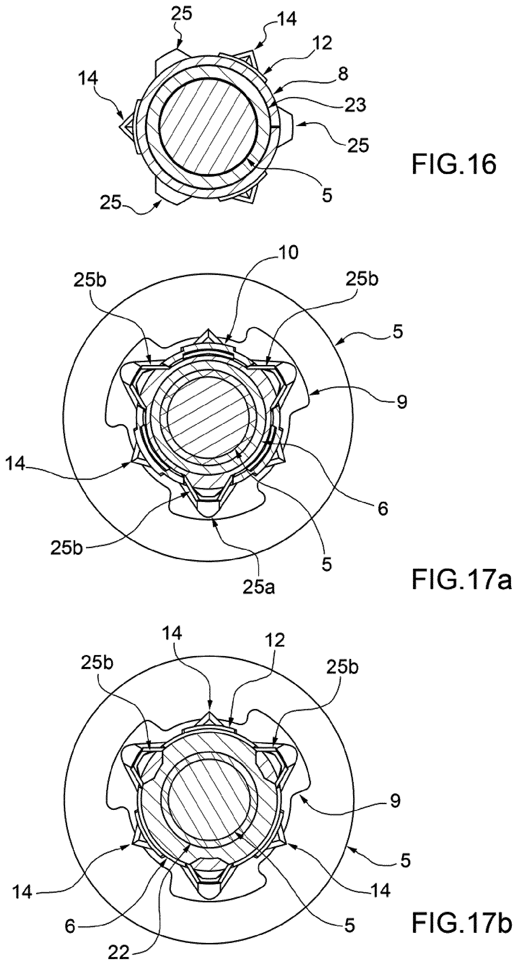

Figure 16 is a cross section along the line III-III of the expansion anchor shown in Figure 13;
Figure 17a is a cross section along the line IV-IV of the expansion anchor shown in Figure 12;
Figure 17b is a cross section along the line V-V of the expansion anchor shown in Figure 12;
Figures 18 to 22 schematically show how the anchor works when expanded in various types of walls;
Figure 23 shows a variant embodiment of the expansion anchor.

### BEST MODE FOR CARRYING OUT THE INVENTION

The present invention will now be described in detail with reference to the attached figures, to allow a person skilled in the art to produce and use it. Various modifications to the described embodiments will be immediately apparent to a person skilled in the art and the general principles described may be applied to other embodiments and uses without thereby departing from the scope of protection of the present invention, as defined in the attached claims. Therefore, the present invention should not be considered to be confined to the embodiments described and illustrated, but it must be granted the widest scope of protection in accordance with the principles and features described and claimed herein.

The idea underlying the present invention is that of producing an expansion anchor having two tubular bodies, inserted one inside the other, one made of rigid or semi-rigid material and the other made of easily deformable/flexible material, which are structured in such a way that, in response to the axial thrust from an expansion nut against them, the tubular body made of rigid or semi-rigid material expands radially, a number of anchoring tabs moving apart, while, at the same time, the tubular body made of deformable material bends at certain longitudinal segments, arching outwards.

The applicant has in fact found that the expansion obtained by moving apart the anchoring tabs of the tubular body made of rigid or semi-rigid material makes it possible to firmly anchor the anchor in holes made in supports made of compact material (concrete, stone, etc.), while the expansion obtained by means of the outward bending of the segments of the tubular body made of deformable material makes it possible to effectively anchor the anchor even in supports which are hollow and/or filled with a non-compact material.

In other words, the present invention is based on producing an anchor made up of two tubular bodies, one made of rigid/semi-rigid material and the other made of deformable material, which are structured so as to expand, fastening/bending depending on the internal make-up of the construction material in which the hole is made. The anchor is structured in such a way that, in a hole made in walls made of solid materials (for example, concrete), it is secured mainly by friction, whereas in a hole made of semisolid or porous materials (for example, hollow blocks or panels), it is secured mainly by contrast of shapes.

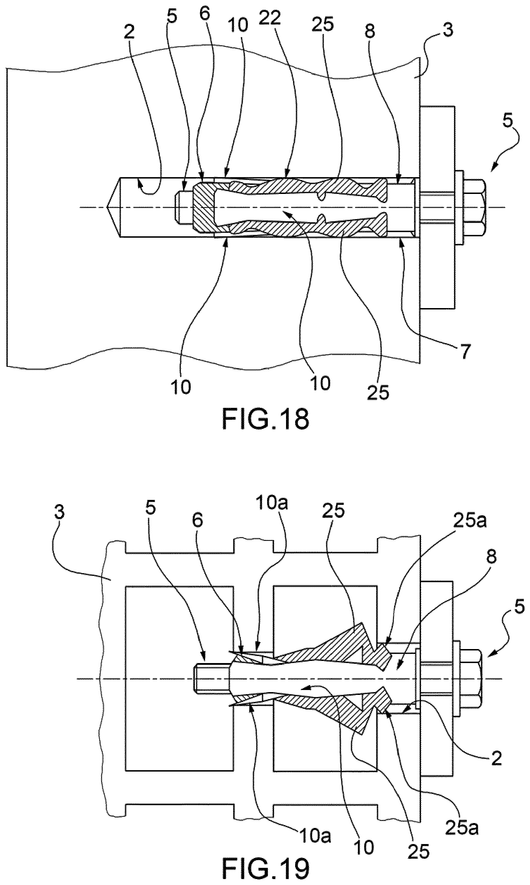

The figures provided show, indicated by the reference numeral 1, an anchoring member, namely an expansion anchor, which may be inserted in an anchoring hole 2 (Figures 18 to 22) made in a support or wall 3. The anchor 1 is structured in such a way as to become anchored/secured firmly in/to the support or wall 3 so that it can preferably perform a function of connection and/or securing a load to said support or wall 3, and/or any similar anchoring function. It is understood that the wall 3 in which the anchoring hole 2 is made may have any structure. The wall 3 may be, for example, a wall with a "non-solid" structure (Figures 19 to 22), i.e. made from bricks having internal partitions spaced apart from one another, defining spaces which are hollow and/or filled with low-density material, or a "non-compact" wall such as a multi-layer wall or a wall made of relatively friable material, for example a granular concrete which is not very compact, or a "compact" wall (Figure 18), i.e. a wall made of a compact material with a high density, such as a wall made of concrete or a wall made of natural stone or solid bricks, and therefore made of a material with a high density.

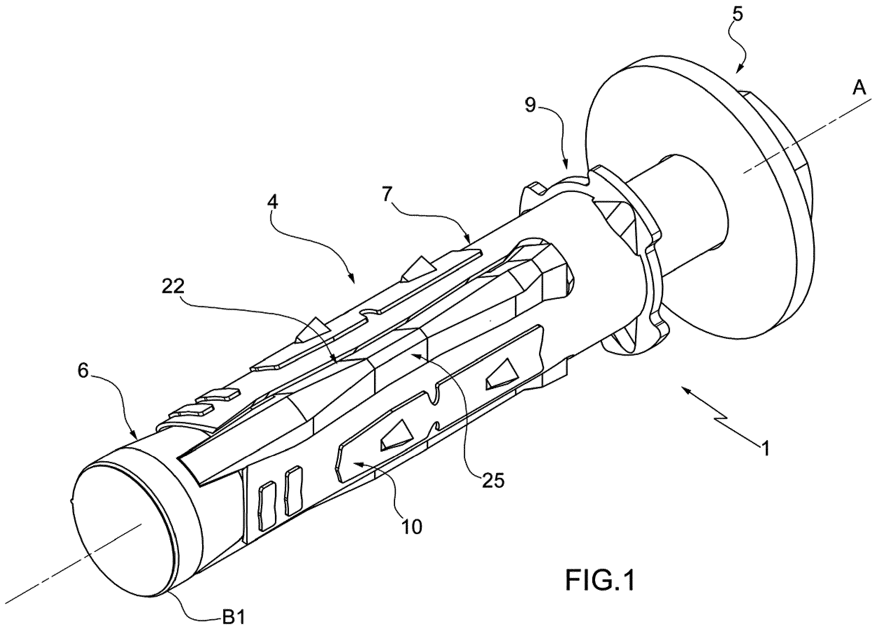

With reference to Figure 1, the anchor 1 according to the present invention comprises a tubular conduit or sleeve 4 of approximately cylindrical shape, which lies along a longitudinal axis A and is structured in such a way that it may be inserted in the anchoring hole 2 so as to be secured to the wall 3 in the manner that will be described in detail below.

The anchor 1 further comprises a tightening screw 5, preferably a threaded screw or a threaded bar, made of a rigid material, preferably metal. The tightening screw 5 has a drive head arranged approximately adjacent to an axial end of the tubular sleeve 4, preferably, but not necessarily, with the interposition of a washer, and a threaded shank that projects from the head, extending inside the internal longitudinal hole in the tubular sleeve 4 along the axis A, in such a way as to be connected, at least partially, to the opposite end.

With reference to a preferred embodiment shown in Figures 1, 2 and 4, the anchor 1 further comprises an expansion cone or nut 6, which is screwed onto the end of the shank of the tightening screw 5 projecting from the tubular body 4 at the opposite end to the head, so as to be inserted at least partially in the central through hole in the tubular sleeve 4 at said end. Preferably, the expansion nut 6 may have a frustoconical outer shape, be made of rigid or semi-rigid material, preferably metal, and have, at the centre, a threaded through bore into which the shank of the tightening screw 5 is screwed.

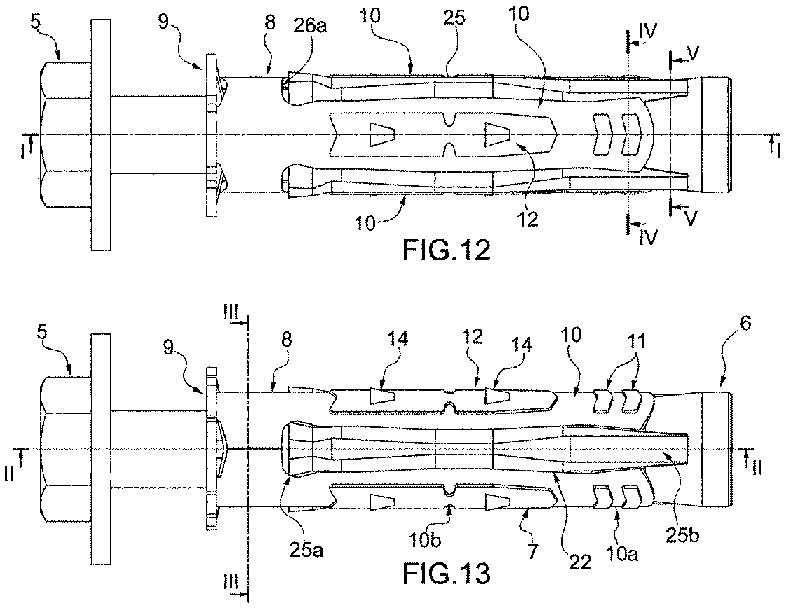

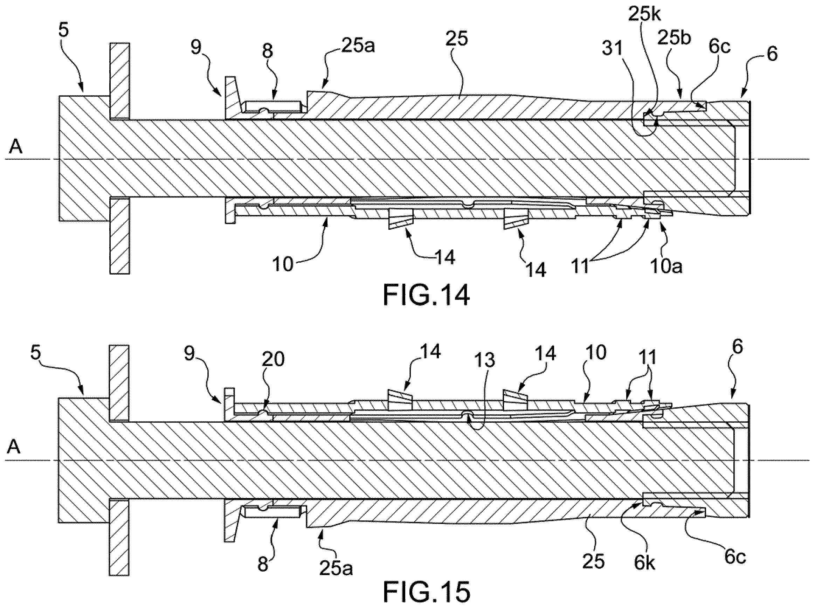

With reference to the preferred embodiment shown in Figures 1, 2, 12-15, the tubular sleeve 4 comprises two substantially tubular bodies, which are inserted/fitted one inside the other in the manner that will be described in detail below.

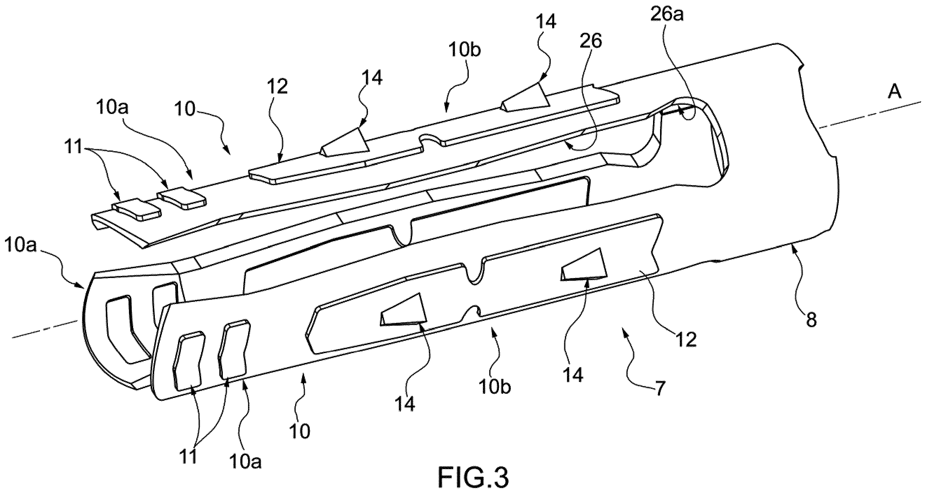

With reference to Figure 3, a first tubular body indicated hereinbelow by the reference numeral 7, is made of a rigid or semi-rigid material. Advantageously, the rigid or semi-rigid material of the tubular body 7 may comprise a metal. The metal from which the tubular body 7 is made may comprise, for example, a steel alloy or any similar metal advantageously having a relatively high degree of rigidity such that it is not deformed easily.

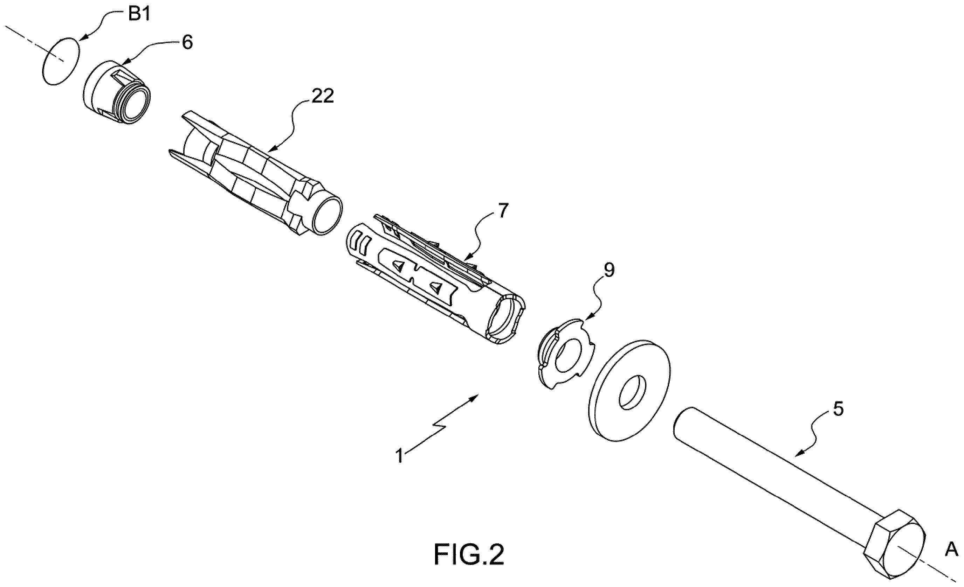

In the preferred embodiment shown in Figures 2 and 3, the tubular body 7 comprises a cylindrical jacket or portion 8 which extends coaxially with the axis A. Advantageously, a sink-prevention flange 9 may be coupled at the end of the cylindrical portion 8 which is adjacent to the head of the screw 5. The head of the screw 5 is arranged in abutment against the flat outer surface of the sink-prevention flange 9, preferably by means of the interposition of the abovementioned washer and, when in use, the load.

With reference to Figures 2 and 3, the tubular body 7 also has a number of longitudinal anchoring tongues or tabs 10 which project from the cylindrical portion 8, in a direction approximately parallel to the axis A, in such a way as to lie parallel and adjacent to one another, as far as their corresponding free ends, which are at the expansion nut 6. The tabs 10 can, in use, move apart radially outwards from the expansion nut 6 as the latter moves axially towards the cylindrical portion 8, said tabs thus moving away from the axis A. Advantageously, the tabs 10 have an approximately rectangular elongate shape and are spaced apart from one another angularly.

In the preferred embodiment shown by way of example in Figures 2 and 3, the tubular body 7 preferably comprises three longitudinal tabs 10 which are shaped in the manner described above and are angularly equidistant from one another. It is understood, however, that the present invention is not limited to a tubular body 7 having three equidistant tabs 10 but, according to alternative embodiments (not shown), the tubular body 7 may comprise any number of tabs 10 and the tabs 10 may be arranged in any angular position with respect to one another.

In the preferred embodiment shown in Figures 3, 6 and 7, the tabs 10 may be shaped in such a way as to have an end portion 10a with a width transverse to the axis A which increases gradually outwards, i.e. towards the expansion nut 6. The applicant has in fact found that this advantageously increases the surface/area for contact between the tab 10 and the innermost part of the hole 2. The tabs 10 may thus be shaped in such a way as to have a widened surface at the free end thereof, to increase the anchoring deep in the hole 2. The applicant has found that such a widened shape ensures rapid, stable anchoring of the expansion anchor 1 at depth, especially in holes made in supports made of compact material. In other words, the end portions 10a are widened to increase the surface area for contact at depth, especially with compact supports, so as to increase the friction forces generated by the expansion. Note that the three tabs 10 make it possible to distribute approximately uniformly the expansion forces and the stresses on the wall of the hole, thereby preserving the structure of the construction material, even in the case of low-strength construction materials, and thus obtaining an optimum counter-pressure response.

In the preferred embodiment shown by way of example in Figures 3, 6 and 7, the end portion 10a of each tab 10 may have an approximately trapezoidal planar shape in which the smaller base is connected to a central portion 10b which is approximately rectangular and is connected in turn to the cylindrical portion 8. One or more protuberances 11, which are adjacent to and aligned with one another, may also be advantageously provided on the outer surface of the end portion 10a of the tab 10. The protuberances 11 are shaped in such a way as to increase the friction between the outer surface for contact between the tab 10 and the wall of the hole 2. Advantageously, the protuberances 11 may be flattened at the surface and may each have the approximate shape of an arrow, preferably oriented with the tip facing the expansion nut 6.

Advantageously, as shown in Figures 3, 6 and 7, the end portion 10a of the tab 10 may be gradually tapered with respect to the central portion 10b, i.e. it may have a thickness which gradually decreases, from the smaller base thereof connected to the central portion 10b, towards the tip, in other words towards the expansion nut 6. Advantageously, the thickness of the end portion 10a of the tab 10 may vary in such a way that the inner surface of the end portion 10 is substantially inclined with respect to the axis A. The applicant has found that said tapering of the end portion 10 advantageously increases the flexibility thereof both in a direction transverse to the axis A and in a longitudinal direction, i.e. parallel to said axis A. Thus, as the anchor 1 expands, the end portion 10a of the tab 10 advantageously adapts to the shape of the deepest portion of the inside wall of the hole 2. Note that a reduced thickness of the tab increases the flexibility thereof, in both the transverse and longitudinal directions, and means that the corresponding sectors match the configuration of the wall of the hole as closely as possible. Advantageously, the thickness of the tab may range from approximately 0.5 to approximately 3 mm, preferably from 0.65 to approximately 2 mm. Advantageously, the thickness of the end portion 10a may range from approximately 0.1 to approximately 3 mm.

It is understood that the protuberances 12 are interrupted and/or absent over outer surface portions of the tabs 10 in such a way as to define weak regions thereof, thereby obtaining an enhanced opening "in stages", resulting from the gradual insertion of the expansion nut in the tubular sleeve 4. Flexibility results in the tabs 10 being completely adapted and adjacent to the walls of the hole, especially in solid materials.

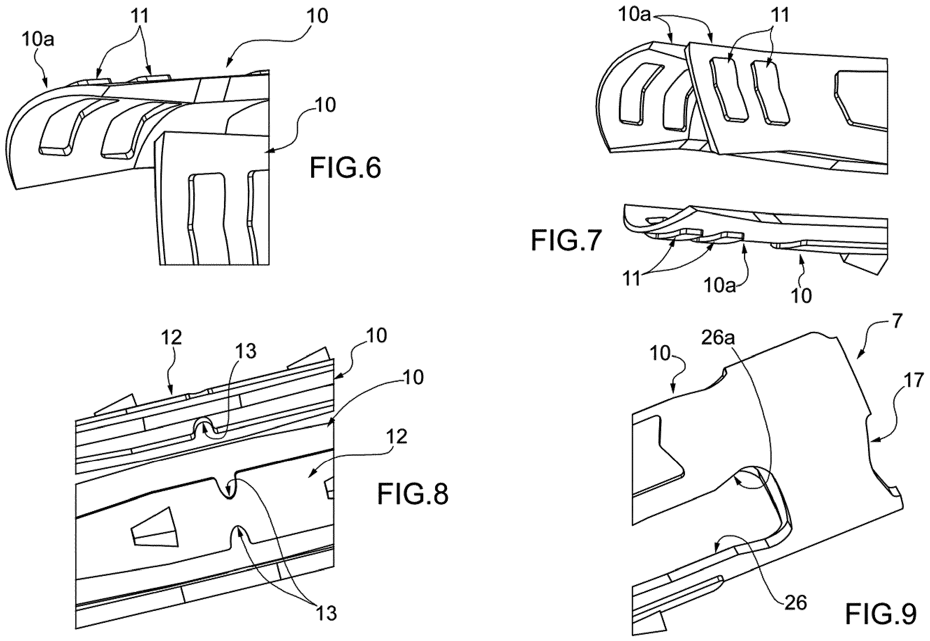

In the preferred embodiment shown by way of example in Figures 3 and 6, the outer surface of the central portion 10b of the tab 10 has a flat protuberance 12 of preferably approximately rectangular shape, with a size such as to locally increase the thickness of the tab 10 and thus strengthen it centrally. In the example shown, the flat protuberance 12 extends centrally and axially on the outer surface of the tab 10 in a direction parallel to the axis A and may have a size such that it has a width and/or length smaller than the width and length, respectively, of the central portion 10b of the tab 10.

The flat protuberance 12 may also have, at the centre, along the two larger sides, at least two surface breaks or notches 13 that extend approximately transverse to the longitudinal axis A and are aligned with one another. Each notch 13 may be made approximately half way along one of the larger sides of the central portion 10b in such a way as to structurally divide the tab 10 into two parts or half-tabs, one front and one rear. The two notches 13 advantageously form on the central portion 10b of the tab 10, a transverse intermediate line of weakness at which, as the anchor 1 expands, one half-tab may move apart with respect to the other adjacent half-tab. In other words, the flat protuberance 12 and the two notches 13 are designed to cause the tab 10 to move apart in a controlled manner at said notches 13.

The thickness of the flat protuberance 12 and the protuberances 11 may be advantageously between approximately 0.1 and approximately 0.5 mm, preferably 0.2 mm, varying as a function of the diameter of the anchor 1. It is understood that the protuberances 12 interrupted by the notches 13 define weak points of the tabs, which in use cause an enhanced opening of the tabs "in stages", resulting from the gradual insertion of the expansion nut 6 in the tubular sleeve 4.

In the preferred embodiment shown by way of example in Figure 3, the flat protuberance 12 of the tab 10 may have, approximately centrally, on the outer surface thereof, one or more non-slip teeth 14, preferably prismatic teeth. The non-slip teeth 14 can, in use, become embedded in the inside wall of the hole 2 in such a way as both to prevent the anchor from rotating about the axis A as the screw 5 is tightened and to increase the friction in the axial direction and therefore oppose extraction of said anchor 1. Each tab 10 may have, for example, a pair of non-slip teeth 14. The non-slip teeth 14 may be arranged one on the front half-tab and the other on the rear half-tab of the flat protuberance 12 in positions aligned one after the another.

Note that both of the protuberances 11 and 12 may be made on the tabs by a process of pressing, similar to pressing sheet metal. For example, the process may involve making pressed-in/depressed areas on the inner face of the tabs 10. Said pressed-in/depressed areas may be made in such a way as to form the protuberances 11 and 12 on the outer face and concave impressions, having the same geometry as said protuberances, on the inner face (Figures 3, 6 and 7). It is understood that the size and geometry of the protuberances 11 and 12 may be such as to increase the rigidity, where necessary, of the sectors of the tabs 10 which may consist of thin sheet metal, and to increase the surface irregularity to obtain greater friction in the hole 2.

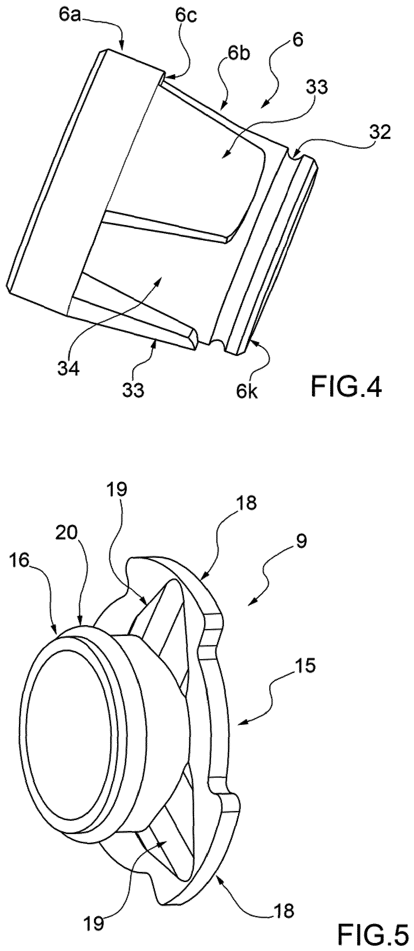

With reference to Figures 2, 3 and 5, the cylindrical portion 8 of the tubular body 7 may have the annular edge adjacent to the head of the screw 5 shaped in such a way as to be coupled to the sink-prevention flange 9. With reference to the embodiment shown by way of example in Figure 5, the flange may be advantageously made of plastic. The flange 9 is advantageously structured in such a way as to ensure both predetermined axial positioning of the anchor 1 in the hole 2 so as to prevent it from sinking into the latter, and a function of self-centring of the screw 5. In Figure 5, the flange 9 has a flat plate-like body 15 arranged in abutment against the annular edge of the cylindrical portion 8 of the tubular body 7 adjacent to the head of the screw 5. In the example of Figure 5, the flange 9 further comprises a central tubular portion 16 of approximately cylindrical shape which is inserted in the longitudinal opening in the cylindrical portion 8. The plate-like body 15 may be substantially circular and is shaped in such a way as to have, along its outer annular edge, a number of radial tabs or spokes 18, preferably three spokes which are angularly equidistant from one another. On the inner surface of the plate-like body 15, on the side away from the head of the screw 5, in line with the spokes 18, there are reinforcing bulges or protuberances 19 that extend radially from the central tubular portion 16 and are inserted in respective notches 17 made on the annular edge of the end of the cylindrical portion 8 (Figure 9). Preferably, the central tubular portion 16 of the flange 9 may have, on the outer surface thereof, an annular coupling relief 20 which is inserted into an annular connection seat made on the inner surface of the end of the cylindrical portion 8 (Figure 2). It is understood that the annular connection seat corresponds to an internal ring-shaped recess that forms an additional point of weakness of the tubular body 7 which both constitutes a point of coupling of the sink-prevention flange 9 and, advantageously, increases flexibility.

In the preferred embodiment shown in Figures 1, 2, 10 and 11, the second tubular body of the tubular sleeve 4, indicated by the reference numeral 22 below, extends along the longitudinal axis A and is made of non-rigid material, i.e. of easily bendable and/or deformable material. Advantageously, the tubular body 22 may be made of plastic, for example a thermoplastic or plastic polymer which is readily flexible, in other words able to bend/deform with a degree of ease as the expansion nut 6 is pushed inside the tubular sleeve 4.

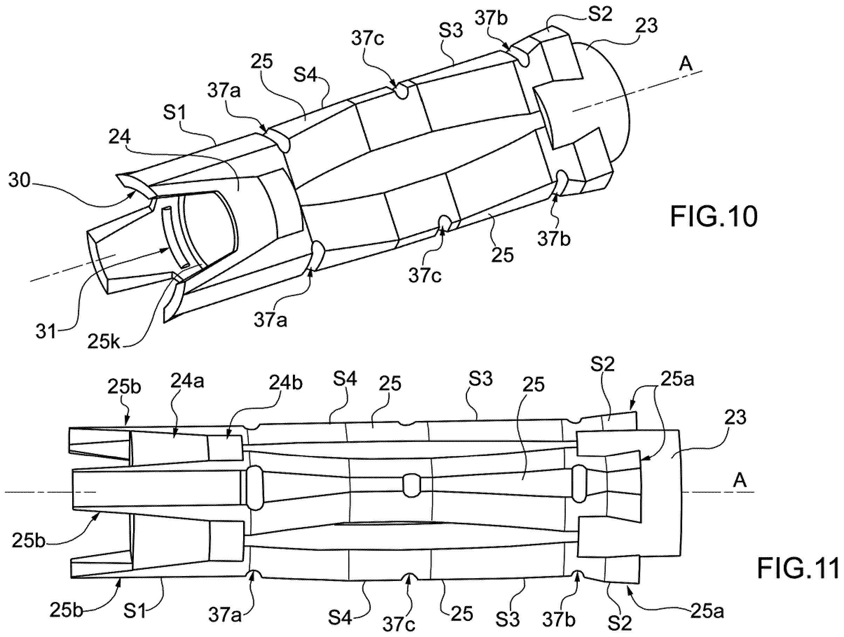

In the preferred embodiment shown in Figures 10 and 11, the tubular body 22 has a number of elongate segments 25, which are approximately rectangular, lying mainly longitudinally. The segments 25 extend parallel to the axis A and are spaced apart from one another angularly around said axis A.

The tubular body 22 also has at least two annular elements 23 and 24 which are approximately coaxial with the axis A, which connect corresponding segments 25 to one another at the axially opposite ends thereof. The annular elements 23 and 24 reciprocally connect the segments 25 at the axially opposite ends thereof, forming therewith a single body.

In the preferred embodiment shown by way of example in Figures 1, 2, 12 and 13, the tubular body 22 is inserted inside the tubular body 7 in such a way that the two annular elements 23 and 24 are inserted in the central longitudinal through hole in the tubular body 7 and, at the same time, the segments 25 are inserted in respective longitudinal slots 26, each of which is defined by two adjacent tabs 10 of the tubular body 7.

In the preferred embodiment shown in Figures 3, 9 and 13, the slots 26 extend parallel to the axis A and have a widened end 26a adjacent to the cylindrical portion 8. At the widened end 26a of the slot is inserted a bulged or enlarged end 25a of a corresponding segment 25.

The widened ends 26a of the slots 26 and the enlarged ends 25a of the segments 25 may advantageously have complementary shapes and sizes in such a way as to snap-engage with one another. Preferably, the widened ends 26a and the enlarged ends 25a may have an approximately circular or ovoid or polygonal (for example rhomboid) shape. The applicant has found that the enlarged ends 25a of the segments 25 advantageously prevent, as the anchor 1 expands, the formation of cracks/splits at the annular element 23. Vice versa, the widened ends 26a of the slots 26 in turn increase the longitudinal flexibility of the tubular body 7, again facilitating expansion in stages and maximum expansion thereof.

With reference to the preferred embodiment shown by way of example in the attached figures, the annular element 23 of the tubular body 22 may comprise an axially bored cylindrical body forming a semi-rigid closure/sealing ring which, in use, firmly holds the enlarged ends 25a of the segments 25, preventing them from becoming detached and promoting fastening, and hence expansion of the rest of the segments 25. The annular element 23 has a size such that it can be firmly inserted in the longitudinal through hole in the cylindrical portion 8 and has, in turn, at the centre, a circular hole, or longitudinal through bore, that houses the shank of the screw 5. The annular element 23 has a size such that it extends underneath the annular portion 8, beyond the widened end 26a of the slots 26. Preferably, the radial thickness of the annular element 23 (measured transversely to the axis A) may correspond to approximately the difference between its outer radius, approximately equal to the internal radius of the annular portion 8, and the radius of its internal bore, approximately equal to the radius of the shank of the tightening screw 5.

With reference to the preferred embodiment shown in Figures 10, 11, 14 and 15, the segments 25 are also connected to the annular element 23 in such a way as to project radially, at least partially, from the outer surface thereof. The enlarged ends 25a of the segments 25 extend axially at least partially over a portion of the annular element 23 which faces, and is underneath, the slots 26. The segments 25 furthermore have respective ends 25b, opposite the enlarged ends 25a, which extend axially over the outer surface of the annular element 24.

According to a preferred embodiment shown by way of example in Figures 10 and 11, the annular element 24 has a shape such that it has a first outer portion 24a which is approximately frustoconical, which opens in the direction of the conical expansion nut 6 and has a size/structure designed to house the latter internally, and a second inner portion 24b, which is approximately cylindrical, which extends axially from the inner small base of the first portion 24a in the direction away from the expansion nut 6.

On the free parts of the first portion 24a included between the ends 25b of the segments 25 there are, preferably, openings 30 (or breaks) which, in use, can house inside them respective raised portions 33 of the expansion nut 6 (Figure 5). The openings 30 furthermore are of a size so as to advantageously promote contact and/or sliding/insertion of the expansion nut 6 under the tabs 10 of the tubular body 7. Preferably, the openings 30 may have a longitudinal section which is approximately wedge-shaped and are spaced apart from one another angularly so as to be arranged approximately aligned with, and underneath, the respective tabs 10 of the tubular body 7. Preferably, three openings 30 of preferably trapezoidal or triangular shape, angularly equidistant from one another, may be made on the first portion 24a. On the inner surface of the first portion 24a there are, moreover, reliefs 31 that lie in a plane transverse to the axis in such a way as to be circularly aligned with one another and are inserted in an annular coupling recess 32 made approximately on the outer surface of the expansion nut 6, preferably in a position adjacent to the edge of the latter (Figure 4).

According to a preferred embodiment shown by way of example in Figures 4, 14 and 15, the annular edge of the frustoconical portion 6b has a flat annular wall 6k which is arranged in a plane orthogonal to the axis A and rests on an annular wall or shoulder 25k made on the inner surface of the first portion 24a. The shoulder 25k may preferably be made in an intermediate position on the inner surface of the first portion 24a and is preferably able to form, in use, a surface for abutment of the expansion nut against the tubular body 22. In use, the annular wall 6k exerts a thrust against the shoulder 25k, causing the first portion 24a to move axially and the segments 25 to gradually bend.

With reference to a preferred embodiment shown in Figure 4, the expansion nut 6 may be shaped in such a way that it has an approximately cylindrical base portion 6a and a frustoconical portion 6b which, in use, can lie between the end portions 10a of the tabs 10 and the ends 25b of the segments 25. On the outer surface of the frustoconical portion 6b of the expansion nut 6 there are preferably the raised portions 33 which are inserted in the respective openings 30 in the annular element 24 so as to be arranged at least partially underneath respective end portions 10a of the tabs 10. The raised portions 33 are spaced apart from one another angularly, and may have an approximately trapezoidal or similar shape, and may have a size such that they lie between two angularly adjacent end portions 25a of the tubular body 22.

The base portion 6a of the expansion nut 6 may preferably have an approximately rectangular or square cross section and have its inner side wall 6c connected to the raised portions 33, defining therewith, on the outer surface of the frustoconical portion 6b, non-rotation seats 34 that house the end portions 25a of the segments 25. Insertion of the end portions 25a of the segments 25 in the non-rotation seats 34 advantageously keeps the expansion nut 6 angularly rigidly secured to the tubular sleeve 4 during screwing of the tightening screw 5, preventing said nut from rotating, something which would prevent it from advancing.

According to a preferred embodiment shown by way of example in Figure 4, the free portions of the inner side wall 6c of the base portion 6a of the expansion nut 6 may advantageously lie in a plane which is approximately orthogonal to the axis A and can be arranged in abutment against the end portions 25a of the segments 25 so as to promote pressure on the latter and consequent bending of said segments 25.

With reference to Figure 2, the through hole in the expansion nut 6 may be preferably closed off by a circular seal B1 that can prevent debris produced by the boring operations, such as dust or particles of grit, from getting into said hole. The seal B1 may comprise a flexible adhesive seal, preferably made of paper or the like, and may be firmly secured to the base portion 6a. The seal B1 prevents debris and impurities from getting into the thread of the through hole in the expansion nut 6, ensuring that it can couple smoothly with the thread of the screw.

According to a preferred embodiment shown by way of example in Figures 10 and 11, each segment 25 may comprise one or more transverse recesses of weakness, each of which separates two adjacent sectors of said segment 25, and can promote outward bending of said sectors.

According to a preferred embodiment shown by way of example in the attached figures, the tubular body 22 may preferably have three segments 25 which are angularly equidistant from one another. Each segment 25 may advantageously comprise three transverse recesses of weakness spaced apart from one another along the axis A.

A first transverse recess 37a may preferably be made on the segment 25, approximately in a position aligned with the tip of the end 10a and approximately with the inner circular base of the portion 24b, and defines a sector S1 corresponding to the end 25b of said segment 25. The applicant has found that the transverse recess 37a promotes bending of the segment 25 under the thrust from the expansion nut 6 and also prevents uncontrolled deformation of the cylindrical portion 24b.

A second transverse recess 37b may preferably be made on the segment 25 approximately in a position aligned with the inner side of the annular element 23, away from the head of the screw 5. The transverse recess 37b may also be preferably aligned approximately with the tapered end part of the widened portion 26a of the slot 26. The transverse recess 27b may also be preferably aligned approximately with the end of the flat protuberance 12. The transverse recess 37b separates a sector S2 associated with the enlarged end 25a from an adjacent central sector S3 and facilitates outward bending of the latter with respect to the sector S2 so as to allow both sectors to reach a position substantially orthogonal to the axis A.

A third transverse recess 37c may preferably be made on the segment 25 in an intermediate position between the two transverse recesses 37a and 37b. Preferably, the transverse recess 37c may be made on the segment 25 in such a way that the distance between it and the recess 37a is greater than the distance between it and the recess 37b. Preferably, the transverse recess 37c may be made on the segment 25 in such a way that it is aligned approximately with the notches 13 in the protuberances 12 on the tabs 10. Preferably, but not necessarily, the transverse recess 37c may be made half way along the axial length of the tabs 10. The transverse recess 37c may separate the central sector S3 from a central sector S4, which is in turn adjacent to the sector S1 but separated therefrom by the transverse recess 37a.

According to a preferred embodiment relating to the stretch of segment between the recesses 37a and 37b, a number of recesses 37c, adjacent to and spaced apart from one another, may be provided. The applicant has found that the use of several adjacent spaced-apart recesses 37c makes it possible to adapt the point of bending of the segment 25 according to the thickness of the wall.

Note that the transverse recesses 37a and 37b promote outward bending of the central sectors S4 and S3 with respect to the sectors S1 and S2, respectively, allowing them to reach a position substantially orthogonal to the axis A.

According to a preferred embodiment shown in Figures 10 and 11, the sector S1 may have a thickness in terms of height and/or width which gradually increases towards the transverse recess 37a. Preferably, the sector S4 may have a thickness in terms of height and/or width which gradually decreases from the transverse recess 37a towards the recess 37c. Preferably, the sector S3 may have a thickness in terms of height and/or width which gradually increases from the transverse recess 37c towards the transverse recess 37b.

According to a preferred embodiment shown in Figures 10 and 11, the outside diameter of the tubular body 22 along the sector S1 is substantially constant. According to a preferred embodiment shown in Figures 10 and 11, the outside diameter of the tubular body 22 along the sector S4 gradually increases from the transverse recess 37a towards the recess 37c.

According to a preferred embodiment shown in Figures 10 and 11, the outside diameter of the tubular body 22 along the sector S3 gradually decreases from the transverse recess 37c towards the recess 37b.

According to a preferred embodiment shown in Figures 10 and 11, the outside diameter of the tubular body 22 along the sector S2 gradually increases from the transverse recess 37b towards the free end thereof, which has the largest (maximum) outside diameter of the anchor 1.

A description of how the anchor 1 works when anchoring to various types of walls 3 is given below.

Figure 18 shows an anchor 1 inserted in a hole 2 made in a compact wall 3. In this case, the tightening of the screw 5 causes the expansion nut 6 to move axially along the axis A, inside the sleeve. The expansion nut 6 causes both the opening of the tabs 10, which are driven into the deep part of the inside wall of the hole 2, and a slight outward bending of the segments 25. In particular, in this phase the ends 10a advantageously open out, promoted by bending that occurs approximately in the flat part of the tab 10 between the protuberances 11 and 12.

In this case, the tabs 10 expand owing to a contained axial movement of the expansion nut 6, which thus causes only outward bending of the segments 25 which is limited and contained by said hole. Therefore, when the anchor 1 is inserted in a hole 2 in a compact wall, it is anchored mainly at depth by means of the ends 10a of the metal tabs 10 of the tubular body 7.

Figure 19 shows an anchor 1 inserted in a hole 2 made in bricks of a wall 3 having at least one pair of cavities divided by a central partition, in which the hole 2 is made in the outer wall of the brick and in the central partition, which define the outer cavity, and the distance between the central partition and the outer wall is by default approximately equal to the length of the tubular sleeve 4. In this case, when the expansion nut 6 moves, this causes the tabs 10 to move apart; when the tabs open, they become anchored by friction in the inner partition while, at the same time, the segments 25 bend outwards. In this phase, the ends 10a and the tab 10 open approximately as far as the notch 13.

In particular, in this case the segments 25 of the tubular body 22, under the axial thrust from the expansion nut 6 on the annular element 24, bend at the recesses and protrude into the empty space of the outer cavity, thereby forming an umbrella body which is anchored by contrast of shapes in the outer wall.

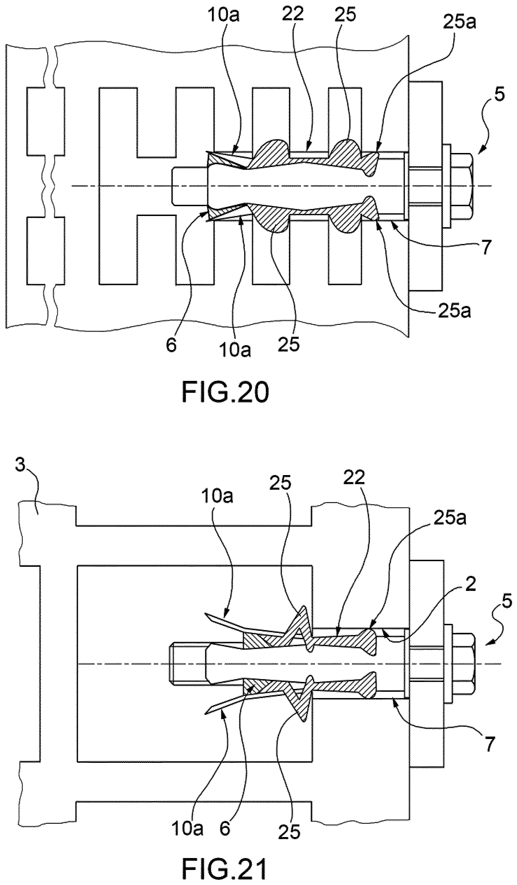

Figure 20 shows an anchor 1 inserted in a hole 2 made in bricks of a wall 3 having a number of cavities divided by respective partitions which are close to one another. In this case, the movement of the expansion nut 6 causes, primarily, the portions 10a and the tabs 10 to move apart, and they open approximately as far as the recess 13, while, at the same time, the segments 25 bend outwards in the corresponding cavities. On opening, the tabs 10 become anchored by friction in the innermost partition, which is the strongest. In this case, thanks to the recesses of weakness, the segments 25 tend to bend inside each cavity, thus forming bulges which anchor the anchor by contrast of shapes in one or more partitions and in the outer wall.

Figure 21 shows an anchor 1 inserted in a hole 2 made in an outer wall of a brick in which the thickness of the outer wall is approximately the same as half of the length of the sleeve 4. In this case, the thrust exerted by the expansion nut 6 causes the tabs 10 to move apart considerably, and, finding the space to be empty, the tabs move apart, bending approximately at the recesses 13. The remaining part of the tabs 10, being inside the hole 2, does not deform.

The expansion nut 6 axially pushes the annular element 24 towards the annular element 23, which remains firmly trapped in the hole 2. In particular, the enlargements 25a prevent rotation of the sleeve 4 as a whole, during screwing. The axial movement of the annular element 24 causes a planned yielding of the segments 25 at the recesses of weakness, causing bending of the sectors and, as they open up, they anchor, along with the tabs 10 which are moved apart by interference, the anchor in the hole.

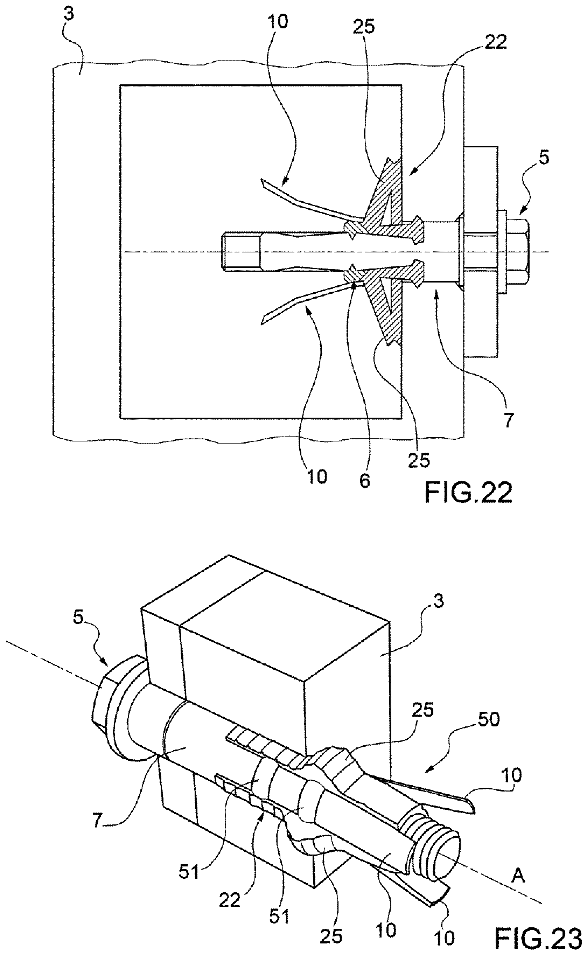

Figure 22 shows an anchor 1 inserted in a hole 2 made in an outer wall of a brick in which the recess 37b on the tubular body 22 projects inside the cavity, right next to the hole 2. In this case, the thrust exerted by the expansion nut 6 causes the tabs 10 to open up considerably and, finding the space to be empty, they move apart freely outwards. The expansion nut 6 axially pushes the annular element 24 towards the annular element 23, which remains firmly trapped in the hole 2. In particular, in this phase the enlargements 25a prevent rotation of the sleeve 4 as a whole, during screwing. The axial movement of the annular element 24 causes a planned yielding of the segments 25 at the three recesses of weakness, in particular causing bending of the sectors S3 and S4 which, as they open up by approximately 360° with respect to one another, form an umbrella body which anchors, by contrast of shapes, along with the moved-apart tabs 10, the anchor in the hole.

The advantages of the expansion anchor have been shown above, and will not be described further, except to specify that the use of the above-described structure advantageously makes the anchor "universal" meaning that, as explained and illustrated above, it can be used for any type of wall, supporting even high-weight loads.

Lastly, it is clear that the expansion anchor described and illustrated herein may be modified or changed without departing from the scope of the present invention as defined in the attached claims.

The embodiment shown schematically in Figure 23 relates to an anchor 50 which is similar to the anchor 1, and its component parts will be labelled, where possible, using the same reference numerals used to label the corresponding parts of the anchor 1.

The anchor 50 differs from the anchor 1 in that the tubular body 7 is inserted in the tubular body 22. According to the embodiment shown schematically by way of example in Figure 23, the tubular body 22 may be shaped in such a way as to have a number of outer annular elements 51 coaxial with the axis A, which reciprocally connect the segments 25 and are fitted on the outer surface of the central portion 10b of the tabs 10. For example, the tubular body 22 may be shaped in such a way as to have at least one pair of annular elements 51 approximately side by side one another and positioned approximately half way along the length of the anchor 50, which reciprocally connect with each section the two facing larger sides of two adjacent segments 25.

## Claims

1. Expansion anchor (1) comprising: a tubular sleeve (4) having a longitudinal axis (A), an expansion nut (6), and a tightening screw (5) designed in such a way as to move the expansion nut (6) along said longitudinal axis (A) inside said tubular sleeve (4) so as to expand the latter; said expansion anchor being **characterized in that**:
said tubular sleeve (4) comprises two tubular bodies (7) (22) inserted one inside the other;
a first tubular body (7) is made of rigid material and has a number of longitudinal anchoring tabs (10), which are spaced apart from one another angularly around said longitudinal axis (A) and which define, in pairs, respective longitudinal slots (26);
a second tubular body (22) is made of easily deformable/flexible material and has a number of longitudinal anchoring segments (25) which extend parallel to said longitudinal axis (A) and which are respectively arranged in said slots (26).

2. Anchor according to Claim 1, in which said tubular bodies (7)(22) are designed in such a way that the movement of said expansion nut (6) along said axis (A) causes said anchoring tabs (10) of the first tubular body (7) to open/move apart and/or said segments (25) of said second tubular body (22) to bend outwards.

3. Anchor according to Claim 1 or 2, in which said second tubular body (22) is arranged inside said first tubular body (7).

4. Anchor according to any one of the preceding claims, in which said segments (25) have respective recesses of weakness that form bending points between two or more adjacent sectors of said segments (25).

5. Anchor according to any one of the preceding claims, in which the second tubular body (22) has at least two annular elements (23)(24) which are inserted in the central longitudinal through hole in the first tubular body (7) and connect corresponding segments (25) to one another at the axially opposite ends thereof, forming therewith a single body.

6. Anchor according to any one of the preceding claims, in which said segments (25) each have an enlarged end (25a) and an opposite end which projects axially beyond said tabs (10) in such a way as to engage in relative anti-rotation seats (34) made in said expansion nut (6).

7. Anchor according to any one of the preceding claims, in which said tabs (10) have respective flat protuberances (12) which are preferably approximately rectangular and of a size such as to locally increase the thickness of said tabs (10), and surface notches (13) formed in the sides of said flat protuberances (12).

8. Anchor according to any one of the preceding claims, in which an end portion (10a) of said tabs (10) has an approximately trapezoidal and/or widened planar shape and has on its outer surface one or more adjacent protuberances (11) .

9. Anchor according to any one of the preceding claims in which said slots (26) have respective widened ends (26a) which house relative bulging or enlarged ends (25a) of said segments (25).

10. Anchor according to any one of the preceding claims in which the outer surface of the expansion nut (6) preferably has raised portions (33) which are inserted in the respective openings (30) made in an annular element (24) of the second tubular body (22) and are arranged at least partially underneath respective end portions (10a) of said tabs (10).

## Patentansprüche

1. Spreizanker (1), umfassend: eine röhrenförmige Hülse (4), die eine Längsachse (A) aufweist, eine Spreizmutter (6) und eine Feststellschraube (5), die auf eine solche Weise ausgelegt ist, dass sie die Spreizmutter (6) entlang der Längsachse (A) in der röhrenförmigen Hülse (4) bewegt, um letztere zu spreizen, wobei der Spreizanker **dadurch gekennzeichnet ist, dass**:
die röhrenförmige Hülse (4) zwei röhrenförmige Körper (7) (22) umfasst, die ineinander eingesetzt sind,
ein erster röhrenförmiger Körper (7) aus einem starren Material hergestellt ist und eine Anzahl von Verankerungslängslaschen (10) aufweist, die um die Längsachse (A) winkelig voneinander beabstandet sind und die paarweise jeweilige Längsschlitze (26) definieren,
ein zweiter röhrenförmiger Körper (22) aus einem leicht verformbaren/flexiblen Material hergestellt ist und eine Anzahl von Verankerungslängssegmenten (25) aufweist, die sich parallel zu der Längsachse (A) erstrecken und die jeweils in den Schlitzen (26) angeordnet sind.

2. Anker nach Anspruch 1, wobei die röhrenförmigen Körper (7) (22) auf eine solche Weise ausgelegt sind, dass die Bewegung der Spreizmutter (6) entlang der Achse (A) bewirkt, dass sich die Verankerungslaschen (10) des ersten röhrenförmigen Körpers (7) öffnen/auseinander bewegen und/oder sich die Segmente (25) des zweiten röhrenförmigen Körpers (22) nach außen biegen.

3. Anker nach Anspruch 1 oder 2, wobei der zweite röhrenförmige Körper (22) in dem ersten röhrenförmigen Körper (7) angeordnet ist.

4. Anker nach einem der vorhergehenden Ansprüche, wobei die Segmente (25) jeweilige Schwächevertiefungen aufweisen, die Biegepunkte zwischen zwei oder mehreren aneinander angrenzenden Abschnitten der Segmente (25) bilden.

5. Anker nach einem der vorhergehenden Ansprüche, wobei der zweite röhrenförmige Körper (22) wenigstens zwei ringförmige Elemente (23) (24) aufweist, die in der mittleren längs verlaufenden Durchgangsbohrung in dem ersten röhrenförmigen Körper (7) eingesetzt sind und entsprechende Segmente (25) miteinander an den sich axial gegenüberliegenden Enden derselben verbinden und mit denselben einen einzelnen Körper bilden.

6. Anker nach einem der vorhergehenden Ansprüche, wobei die Segmente (25) jeweils ein vergrößertes Ende (25a) und ein gegenüberliegendes Ende aufweisen, das auf eine solche Weise über die Laschen (10) hinaus axial vorsteht, dass es mit relativen verdrehfesten Sitzen (34) eingreift, die in der Spreizmutter (6) hergestellt sind.

7. Anker nach einem der vorhergehenden Ansprüche, wobei die Laschen (10) jeweilige flache Vorsprünge (12), die vorzugsweise ungefähr rechteckig sind und eine solche Größe aufweisen, dass sie die Dicke der Laschen (10) lokal erhöhen, und Oberflächeneinkerbungen (13), die in den Seiten der flachen Vorsprünge (12) ausgebildet sind, aufweisen.

8. Anker nach einem der vorhergehenden Ansprüche, wobei ein Endabschnitt (10a) der Laschen (10) eine ungefähr trapezoide und/oder erweiterte planare Form aufweist und auf seiner Außenfläche eine oder mehrere aneinander angrenzende Vorsprünge (11) aufweist.

9. Anker nach einem der vorhergehenden Ansprüche, wobei die Schlitze (26) jeweilige erweiterte Enden (26a) aufweisen, die relative wulstige oder vergrößerte Enden (25a) der Segmente (25) aufnehmen.

10. Anker nach einem der vorhergehenden Ansprüche, wobei die Außenfläche der Spreizmutter (6) vorzugsweise erhabene Abschnitte (33) aufweist, die in den jeweiligen Öffnungen (30), die in einem ringförmigen Element (24) des zweiten röhrenförmigen Körpers (22) hergestellt sind, eingesetzt sind und wenigstens zum Teil unter jeweiligen Endabschnitten (10a) der Laschen (10) angeordnet sind.

## Revendications

1. Coquille d'expansion (1) comprenant : un manchon tubulaire (4) ayant un axe longitudinal (A), un écrou d'expansion (6), et une vis de serrage (5) conçue de manière à déplacer l'écrou d'expansion (6) le long dudit axe longitudinal (A) à l'intérieur dudit manchon tubulaire (4) de manière à dilater ce dernier ; ladite coquille d'expansion étant **caractérisée en ce que** :
ledit manchon tubulaire (4) comprend deux corps tubulaires (7) (22) insérés l'un dans l'autre ;
un premier corps tubulaire (7) est réalisé en matériau rigide et comporte un certain nombre de pattes d'ancrage longitudinales (10), qui sont espacées les unes des autres de manière angulaire autour dudit axe longitudinal (A) et qui définissent, par paires, des fentes longitudinales respectives (26) ;
un second corps tubulaire (22) est réalisé en un matériau facilement déformable/flexible et comporte un certain nombre de segments d'ancrage longitudinaux (25) qui s'étendent parallèlement audit axe longitudinal (A) et qui sont respectivement disposés dans lesdites fentes (26) .

2. Coquille selon la revendication 1, dans laquelle lesdits corps tubulaires (7) (22) sont conçus de telle manière que le mouvement dudit écrou d'expansion (6) le long dudit axe (A) provoque l'ouverture/le déplacement desdites pattes d'ancrage (10) du premier corps tubulaire (7) et/ou la flexion vers l'extérieur desdits segments (25) dudit second corps tubulaire (22).

3. Coquille selon la revendication 1 ou 2, dans laquelle ledit second corps tubulaire (22) est disposé à l'intérieur dudit premier corps tubulaire (7).

4. Coquille selon l'une quelconque des revendications précédentes, dans laquelle lesdits segments (25) ont des évidements respectifs de faiblesse qui forment des points de flexion entre deux ou plusieurs secteurs adjacents desdits segments (25).

5. Coquille selon l'une quelconque des revendications précédentes, dans laquelle le second corps tubulaire (22) comporte au moins deux éléments annulaires (23) (24) qui sont insérés dans le trou traversant central longitudinal du premier corps tubulaire (7) et relient entre eux des segments correspondants (25) au niveau des extrémités axialement opposées de ceux-ci, formant ainsi un corps unique.

6. Coquille selon l'une quelconque des revendications précédentes, dans laquelle lesdits segments (25) ont chacun une extrémité élargie (25a) et une extrémité opposée qui fait saillie axialement au-delà desdites pattes (10) de manière à venir en prise avec des sièges anti-rotation relative (34) réalisés dans ledit écrou d'expansion (6).

7. Coquille selon l'une quelconque des revendications précédentes, dans laquelle lesdites pattes (10) présentent des protubérances plates (12) respectives qui sont de préférence approximativement rectangulaires et d'une taille telle qu'elles augmentent localement l'épaisseur desdites pattes (10), et des encoches de surface (13) formées dans les côtés desdites protubérances plates (12).

8. Coquille selon l'une quelconque des revendications précédentes, dans laquelle une partie d'extrémité (10a) desdites pattes (10) a une forme plane approximativement trapézoïdale et/ou élargie et présente sur sa surface extérieure une ou plusieurs protubérances adjacentes (11) .

9. Coquille selon l'une quelconque des revendications précédentes dans laquelle lesdites fentes (26) ont des extrémités respectives élargies (26a) qui logent des extrémités relatives renflées ou élargies (25a) desdits segments (25).

10. Coquille selon l'une quelconque des revendications précédentes dans laquelle la surface extérieure de l'écrou d'expansion (6) présente de préférence des parties en relief (33) qui sont insérées dans les ouvertures (30) respectives réalisées dans un élément annulaire (24) du second corps tubulaire (22) et sont disposées au moins partiellement sous les parties d'extrémité (10a) respectives desdites pattes (10).
